# EUROPEAN PATENT SPECIFICATION

(11) **EP 3 581 020 B1**
(45) Date of publication and mention of the grant of the patent: **01.11.2023**
(21) Application number: 19178968.4
(22) Date of filing: 07.06.2019
(51) Int. Cl.: A01G 9/04, A01G 27/02

(54) **ASSEMBLY COMPRISING A FLOWERPOT AND A LIQUID RESERVOIR**
MONTAGE AUS BLUMENTOPF UND FLÜSSIGKEITSBEHÄLTER
ENSEMBLE COMPRENANT UN POT DE FLEURS ET UN RESERVOIR DE LIQUIDE

(30) Priority: 12.06.2018 NL 2021104
(43) Date of publication of application: 18.12.2019
(73) Proprietor: A.J.M. de Koning Beheer B.V., 2631 NA Nootdorp (NL)
(72) Inventor: DE KONING, Adrianus Johannes Maria, 2631 NA Nootdorp (NL)
(74) Representative: Algemeen Octrooi- en Merkenbureau B.V.

(56) References cited:
- WO-A1-2016/089742
- US-A1- 2003 106 262
- US-A1- 2006 207 175
- US-A1- 2010 218 422
- US-A1- 2013 133 255

## Description

The invention relates to an assembly comprising a flowerpot and a liquid reservoir, wherein the flowerpot is provided with a base part, with a side wall whereof a rim, facing away from the base part, defines an opening leading into the interior of the flowerpot, as well as with a liquid opening which is provided in the base part.

The invention further relates to a liquid reservoir to be connected to the flowerpot.

Such an assembly is known, for example, from WO 2016/11626. For this, the flowerpot which is known herefrom is positioned fully or almost fully in a liquid reservoir, so that the flowerpot is protected by the liquid reservoir during transport. As a result of the complete enclosure of the flowerpot, a known liquid reservoir of this type is therefore less suitable in the seed development phase of a plant, since the complete protective enclosure by the liquid reservoir adversely affects for the plant the quantity of receivable light, even if the liquid reservoir were to be made transparent. Another major drawback is that the liquid reservoir, despite the presence of indicators, can be overfilled with water, which, particularly in the case of certain ornamental plants, can damage the ornamental plant. In addition, the assembly uses a relatively complex and costly fuse mechanism for supplying water to the plant, the working of which is also dependent on the used growth medium in the pot. US 2013/133255 discloses an assembly according to the preamble of claim 1.

It is an object of the invention to provide an assembly which can be used both after the seed development phase and in the seed development phase. An additional object is that the maximum quantity of liquid to be added to the assembly is automatically determined.

These objects are achieved with an assembly as defined in Claim 1.

In the assembly, the liquid reservoir is provided with a base part, as well as with a reservoir side wall whereof a rim, facing away from the base part, defines a liquid reservoir opening leading into the interior of the liquid reservoir. The assembly is further provided with at least one liquid drainage hole situated at a distance from the base part of the liquid reservoir, so that the assembly is able to be filled with liquid, for example water or an aqueous solution, with a maximum liquid volume. The reservoir side wall comprises, at least in part, the same shape as a part of the side wall of the flowerpot, so that a part of an inner side of the reservoir side wall is able to be displaced over a bottommost part of the outer side of the side wall of the flowerpot in order to provide a connection therebetween, which extends around the centre axis of the assembly.

In this way, an assembly is provided in which the flowerpot is at least half not covered by the liquid reservoir, namely minimally the topmost part from the middle of the side wall of the flowerpot, viewed in the direction of the centre axis of the flowerpot. The relatively limited enclosure of the pot by the liquid reservoir does not affect, or only minimally affects, the (seed development) characteristics of the pot in which the plant grows.

By means of the, for example, water-filled reservoir, the watering frequency for the plant growing in the pot can also be reduced during the seed development phase. One advantage of this is that costs can be saved through a reduction in the number of watering actions. An additional advantage of a low watering frequency is that the number of drying actions in greenhouses, which normally follow a watering action in the cultivation phase, can decrease, which, apart from a lowering of costs, also offers environmental advantages, because the cultivation process in the greenhouses in which the plants are cultivated will then consume less energy as a result of the reduction in the number of drying actions.

Particularly in the cultivation of orchids, it is an object to increase the durability for the consumer, but also to minimize the quality losses in the transport phase and in the shop phase. With the liquid reservoir as claimed in the appended claims, it is possible, for example halfway through the cultivation, in the cooling phase, to provide the assembly as claimed, wherein the flowerpot is a seed pot containing a growing orchid. In the assembly, the roots of the orchid can end up minimally, preferably in the measure of 1.0-2.5 cm, in the water. The liquid reservoir can also provide a sufficiently large water buffer to bridge a relatively long time span also after the seed development phase. In addition, as a result of the chosen connection obtained by the partially overlapping side walls of the liquid reservoir and the flowerpot in the assembly, the total height of the assembly is able to be kept relatively limited. The relatively limited height of the assembly can offer advantages, particularly during transport of the assembly, since, in a limited transport space in the vertical direction, possibly more assemblies is able to be transported. As a result of the limited height increase which can be provided with the assembly, only minimal, or even no adaptations, are required to be made in (ornamental) pots in which the assembly is to be positioned, for example, around the house by a consumer. The ornamental pots or decoratives can be made, for example, of ceramic.

The assembly is further advantageously provided with at least one liquid drainage hole situated at a distance from the base part of the liquid reservoir, so that the assembly is able to be filled with liquid, normally, in the case of plants, water or an aqueous solution, with a maximum liquid volume. In this way, a user-friendly assembly is provided, because the filling with liquid is always limited to a maximum volume, with the result that users, or possibly a machine, need to fill the assembly relatively quickly and less accurately with liquid, since excess water is automatically led off from the assembly via the liquid drainage hole.

A displacement in a direction of the centre axis of the reservoir and the flowerpot, and the consequent sliding of the part of the inner side of the reservoir side wall over the bottommost part of the outer side of the side wall of the flowerpot automatically provides a (clamping) connection. The connection is therefore able to be provided without other displacements, such as a rotation about the centre axis of the reservoir and the flowerpot. The part of the inner side of the reservoir side wall and the part of the bottommost part of the outer side of the side wall of the flowerpot are constructed flat for the sliding of these parts one over the other in order to obtain the clamping connection. By flat is meant that these parts comprise no visually perceptible projections/bulges or recesses and the like. The connection to be established is simply based on friction between the surfaces of the parts which slide one over the other, that is to say the surface part of the part of the inner side of the reservoir side wall and the surface part of the bottommost part of the outer side of the side wall of the flowerpot.

It is possible to provide a connection between the flowerpot and the liquid reservoir in which a bottommost side wall section of the flowerpot is not in sealing contact with the side wall of the liquid reservoir. In such a side wall section of the flowerpot, close to the base part of the flowerpot, it may be possible to make a liquid opening in place of or in addition to a liquid opening in the base part, so that liquid can flow out of the liquid reservoir into the flowerpot as the assembly is being filled with liquid.

In the connected state, the liquid reservoir situated over the bottommost part of the flowerpot covers the flowerpot by maximally 50%, so that the liquid reservoir has no or negligible influence on, for example, the quantity of light which falls on the plant growing in the pot. Preferably, the liquid reservoir covers maximally 50% of the side wall of the flowerpot. In this way, an assembly which can be used already in the seed development phase and through to the consumer is obtained.

By flowerpot is in this document meant not only a pot or seed pot for flowers, but also a pot or seed pot for other plants, although the flowerpot as shown and described in this document is especially suitable for ornamental plants or flowers such as an orchid. Normally, in the pot of the assembly is found a root system of a plant and the pot is at least partially filled with growth medium.

Preferably, the connection is a liquid-tight connection. The connection between flowerpot and reservoir takes place at a relatively limited height relative to the total height of the assembly. Normally the connection takes place in the region of the base part of the flowerpot and it extends over a short distance, relative to the height of the flowerpot, in the direction of the rim of the flowerpot, for example a distance corresponding to 1/3 of the height of the flowerpot. As a result of the watertight connection, the danger of leaks of liquid during use of the assembly, for example in the course of sleeving and/or during transport, or in a shop if a user places the plant, for example, obliquely in a shopping trolley or car, can be reduced.

In terms of convenience of use and production, it is advantageous to clamp the side wall of the flowerpot to the reservoir side wall through the displacement of the side walls relative to one another, in order to provide the connection. In order to obtain the clamping force, a part of the inner side of the reservoir side wall can be slid without play over a part of the outer side of the flowerpot through displacement of the flowerpot and the reservoir in a direction of the centre axis of the reservoir and the flowerpot, with the result that the side walls overlap one another. This can be done manually without the use of tools. Of course, the coupling of the reservoir and the flowerpot is also able to be mechanized with the aid of a machine. For a good-quality fluid-tight connection, additional aids such as, for example, a sealing ring, may be used between the side walls. However, it has been shown in practice that a good liquid-tight connection can be provided without aids to assist in the clamping of the reservoir and the flowerpot. The clamping-based connection is relatively cheap to produce and easy to execute such that a strong assembly is provided. For example, it is easy by clamping to achieve that, if the assembly is grasped by a user only by the pot, the liquid-filled reservoir will not come loose from the pot.

A connection which is easy to establish by sliding is provided by constructing at least those parts of the side wall of the flowerpot and the reservoir side wall which are to be connected to one another in the shape of a side wall of a truncated cone, or in the shape of side wall parts of a frustum. By sliding the side walls, or parts of the side walls, which, viewed from the base parts, extend conically, one over the other, at a certain point sufficient clamping is attained, with the result that the connection is established relatively easily and with a great convenience of use.

In the assembly, the side wall of the flowerpot can be provided with the at least one liquid drainage hole situated at a distance from the base part of the liquid reservoir.

If the flowerpot is a standard flowerpot, the opening for the provision of the liquid drainage hole can be made in situ by making a hole in the side wall of the flowerpot at a predefined height. It is also possible to make markings on a flowerpot which define the position, or various positions depending on the type of plant in the flowerpot, at which a user should make a hole in the flowerpot. A weakening, for example a perforation, may also be made, with the result that the liquid drainage hole(s) can be easily made in the flowerpot by a user, for example with the aid of a screwdriver.

It is also possible to provide the liquid reservoir with at least one liquid drainage hole situated at a distance from the base part of the liquid reservoir, so that the liquid reservoir can be filled with liquid, for example water or an aqueous solution, with a maximum liquid volume.

Furthermore, the base part of the liquid reservoir can be provided with a base part section and at least one base element, which latter is raised relative to the base part section and is situated at a distance from the reservoir side wall, wherein the at least one raised base element is provided with the at least one liquid drainage hole, which is situated at a distance from the base part section.

The base element can be constructed in the shape of a dome. In this way, a liquid drainage hole can be easily provided in the base part, for example by making a liquid drainage hole opening in or close to the highest part, measured from the lower situated base part section. In place of a single base element, it is also possible for the base part to comprise various base elements.

The at least one raised base element can be provided with a base element top surface and with at least one base element side face extending between the base element top surface and the base part section, wherein the at least one liquid drainage hole is situated in the base element top surface, or close to the base element top surface, in the base element side face.

The base element can be shaped, for example, as a frustum or as a truncated cone. The base element can be arranged centrally in the base part, for example such that the centre axis of the base element coincides with the centre axis of the reservoir. At the same time, the base element can be provided somewhat eccentrically from the middle of the liquid reservoir. A base element which is fitted centrally or close to the middle of the liquid reservoir and is provided with a liquid drainage hole which is situated at a distance from the base part section can, in combination with a liquid-tight connection between the pot and the reservoir, provide the additional advantage that the assembly can be positioned at a relatively large angle, for example an angle of 45 degrees or more, between the centre axis of the assembly and the vertical, wherein the danger of liquid leaking out of the reservoir via the liquid drainage hole is reduced. This is particularly advantageous in order to prevent leaking during transport of the assembly, but also to minimize the chance of leaks if a consumer positions the assembly obliquely in a shopping trolley.

It is also possible for the base part to be provided with various base elements.

Such various base elements can even comprise various heights relative to the lowest part of the base part section. It is herein possible that the at least one liquid drainage hole should still be made by a user, depending on the type of plant in the flowerpot or depending on the point in the seed development phase. It is, for example, further possible to place symbols, corresponding to, for example, various plants or various seed development phases, on a single base element, or on the various base element top surfaces, so that a user can easily establish where or at what height a liquid drainage hole should be made, for example by the creation of an opening. As already stated above, a weakening, for example a perforation, may be made, with the result that the liquid drainage hole can be made relatively easily in the flowerpot by a user, for example with the aid of a screwdriver.

In another aspect, it is possible, by varying the dimensions of the base element or base elements in combination with the height of the liquid drainage hole relative to a lowest base part section, to regulate the quantity of liquid which is able to be maximally accommodated in the liquid reservoir concerned.

The above-described aspects will be explained below with reference to a number of illustrative embodiments in combination with the figures. The invention is not, however, limited to the illustrative embodiments described below. Rather, a number of variants and modifications are possible, which likewise make use of the concept of the invention and therefore fall within the scope of protection. In particular, the possibility is stated of combining the characteristics/aspects which are individually stated in the description and/or are shown in the figures with the characteristics of the claims, subject to their compatibility.
Figure 1 shows an assembly in which, between a flowerpot and a liquid reservoir, no connection has been established;
Figure 2 shows an assembly according to Figure 1, in which, between a flowerpot and the liquid reservoir, a connection has been established;
Figure 3 shows a cross section of the assembly which is shown in Figure 2;
Figure 4 shows a cross section of a liquid reservoir;
Figure 5 shows a cross section of another embodiment of the liquid reservoir;
Figures 6a,b show alternative embodiments of the assembly.

In the figures, the same components are provided with the same reference symbols.

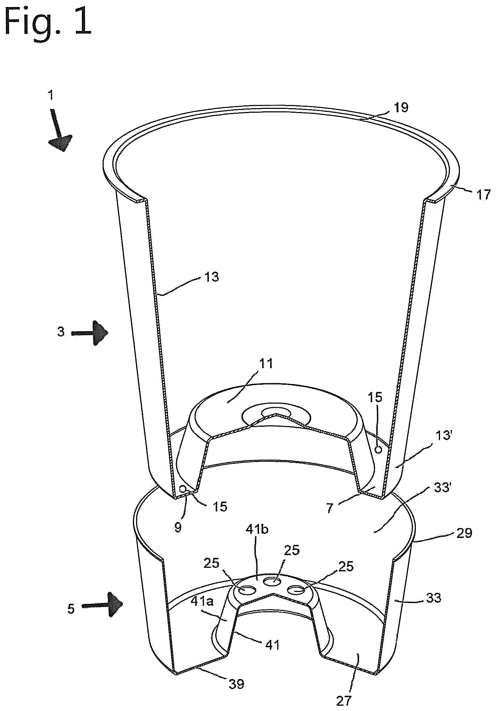

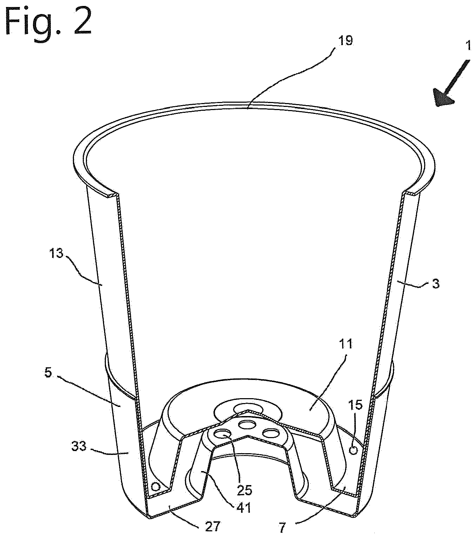

Figures 1-3 show an assembly 1 comprising a flowerpot 3 and a liquid reservoir 5. The flowerpot can be a standard flowerpot which is known per se, for example having a minimum height between 10 and 30 cm. The flowerpot 3 and/or the reservoir 5 are made of plastic and may be made of the same material. It is possible to make the flowerpot 3 and/or the reservoir 5 of a transparent plastic, if so desired. The flowerpot can be a seed pot for a plant, for example an ornamental plant such as an orchid. The height of the flowerpot 3 is taller than the height of the reservoir 5, preferably at least twice as tall. The material required to produce the reservoir is hence minimal, with the result that the reservoir 5 is able to be produced relatively cheaply.

The flowerpot 3 is provided with a base part 7. The base part 7 of the liquid reservoir 5 is provided with a pot base part section 9 and a pot base element 11, which latter is raised relative to the pot base part section 9 and is situated at a distance from a conically extending side wall 13 of the flowerpot 3.

The pot base element 11 comprises the shape of a truncated cone, having a side face extending conically from the pot base part section 9 and having a top surface in which can be situated, for example, an opening as is shown, or various openings (not shown), through which roots of a plant can extend. The pot base part section 9 is provided with a number of liquid openings 15. These can comprise a round shape, as shown. Of course, other shapes, such as, for example, slots, are also possible. Although not shown, it is also conceivable for a person skilled in the art to make a liquid opening in a bottommost side wall section of the side wall of the pot 3, close to the base part, if, in the connected state of the pot 3 and the reservoir, the bottommost side wall section is exposed, that is to say forms no part of the connection and is not in sealing contact with the inner side of the reservoir 5, so that, in the assembly, water can flow from the reservoir, via the liquid opening in the bottommost side wall section, into the flowerpot. In addition, liquid openings (not shown) can be present in the pot base element 11, for example close to or crossing over into the pot base part section 9.

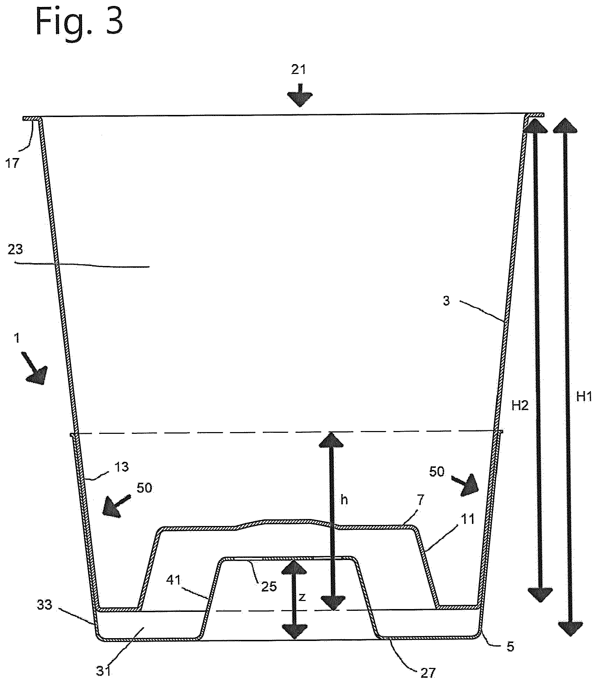

The conically extending side wall 13 is connected at one end to the pot base part section 9 of the base part 7, whilst the other end is formed by or connected to a radially outwardly extending flange 17. The transition between side wall 13 and flange 17 provides a rim 19, facing away from the base part, which defines an opening 21 (Figure 3) into the interior 23 of the flowerpot 3.

The liquid reservoir 5 is provided with a base part 27, as well as with a reservoir side wall 33 whereof a rim 29, facing away from the base part 27, defines a liquid reservoir opening leading into the interior 31 (Figure 3) of the liquid reservoir 5.

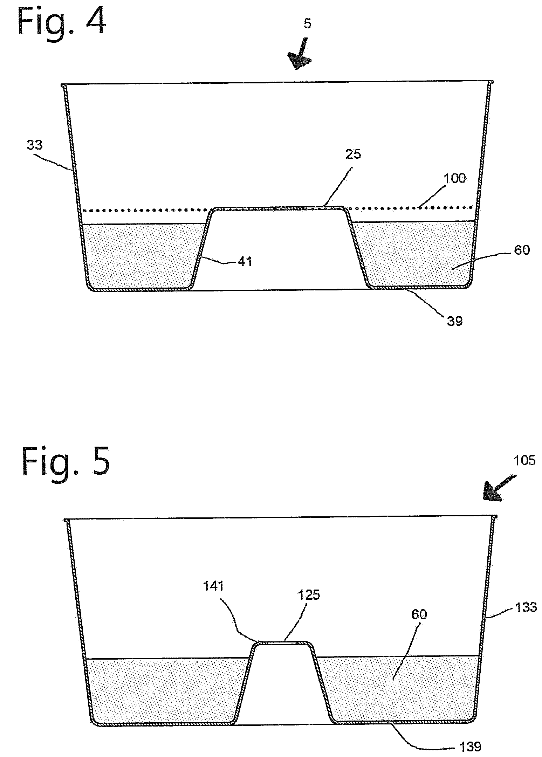

The assembly 1 which is shown in Figures 1-4, more particularly the liquid reservoir 5, is further provided with a number of liquid drainage holes 25 situated at a distance from the base part 27 of the liquid reservoir 5, so that the assembly 1 is able to be filled with liquid, for example water or an aqueous solution, with a maximum liquid volume. This maximum liquid volume is represented by the dotted line 100 in Figure 4. The liquid drainage holes 25 can comprise any desired shape, such as, for example, slot-shaped liquid drainage holes.

As can be seen in the figures, the reservoir side wall 33 that extends conically from the base part 27 comprises the same shape as that side wall 13 of the flowerpot 3 that extends conically from the base part 7. Although not shown, it is not necessary for the side walls 13, 33 to entirely comprise the same shape, only that part of each side wall 13, 33 for providing a connection between the flowerpot 3 and the liquid reservoir 5 should comprise the same shape.

By displacing, more particularly sliding, a flat surface part of an inner side 33' of the reservoir side wall 33 over a flat bottommost surface part of the outer side 13' of the side wall 13 of the flowerpot 3, a watertight connection 50 therebetween, which extends around the centre axis of the assembly 1 (Figure 3), is possible by means of the clamped side walls of the flowerpot 3 and the reservoir 5, situated butting one against the other without play or almost without play. The clamped connection, which is merely based on friction, is a simple, but relatively strong connection. The connection provided by the overlapping side walls 13, 33 extends over a height h as is represented in Figure 3, wherein the height h is preferably less than 50 % of the total height H1 of the assembly 1. Preferably, the height h is less than 35 % of the total height H2 of the flowerpot. As a result of the relatively long distance of the connection represented by the height h, small irregularities can be compensated in order to provide a liquid-tight connection 50. As a result of the overlapping side walls, the total height H1 of the assembly is only minimally higher than the height H2 of the flowerpot, for example maximally 20% higher. In the shown illustrative embodiment, the height H1 of the assembly is only about 5% higher than the height H2 of the flowerpot. The overlapping side wall parts therefore have a dual function, on the one hand the provision of a connection between pot 3 and reservoir 5, and on the other hand the provision of a compact assembly having a height H1 which shows a relatively limited increase relative to the flowerpot height H2.

At least those parts of the side wall 13 of the flowerpot 3 and the reservoir side wall 33 which are to be connected to one another have, in the embodiments shown in the figures, the shape of a side wall of a truncated cone. The side walls extending from the base parts preferably have a conical path, with the result that these, if so desired, can also comprise the shape of side wall parts of a frustum, wherein the cross-sectional shape through a flowerpot 3 or reservoir 5 can form a polygon, for example a quadrilateral or hexagon.

The connection 50 formed by the clamped overlapping side wall parts is releasable, preferably manually releasable by a user without the use of a tool.

Furthermore, the base part 27 of the liquid reservoir 5 is provided with a base part section 39 and a base element 41, which latter is raised relative to the base part section 39 and has with a side face part 41a, at a certain height, a uniform distance to the reservoir side wall 33. The at least one raised base element 41 is provided in the top surface part 41b thereof with the already abovementioned liquid drainage holes 25, which are situated at a vertical distance z (Figure 3) from the base part section 39. The base element 41 is constructed as a truncated cone. The base element 41 is arranged centrally in the base part, wherein the centre axis of the base element 41 coincides with the centre axis of the reservoir 5. If so desired, the base element (not shown) can also be provided eccentrically from the middle of the base part 27. The base element can comprise various shapes, for example in a dome shape or the shape of a frustum (not shown). It is also possible for the base part to be provided with various base elements (not shown). In this way, in the base part 27 a liquid drainage hole 25 can easily be provided, for example by making in or close to the highest part, viewed measured from the lower situated base part section, a liquid drainage hole opening. In place of a single base element, it is also possible for the base part to comprise various base elements (not shown).

As shown in Figures 4 and 5, it is possible, given constant dimensions of the base part 127 and the side wall 133, as well as constant height of the liquid drainage hole 25; 125 as shown in Figures 4 and 5 and which height corresponds to the height z as shown in Figure 3 relative to a lowest base part section 39; 139, to regulate, by varying the dimensions of the base element 41, 141 of the reservoir 5; 105, the quantity of liquid 60 which is able to be maximally accommodated in the liquid reservoir concerned.

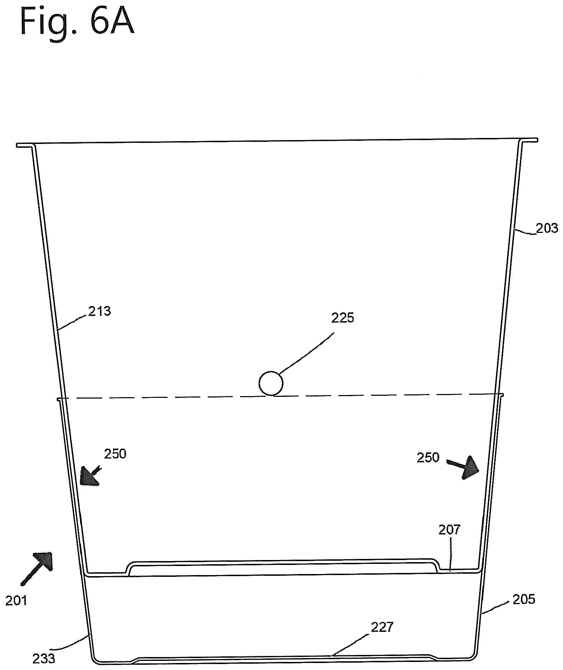

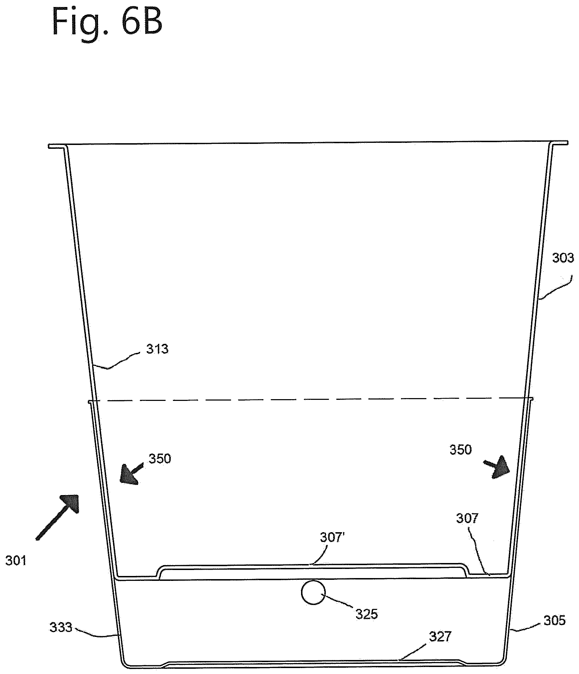

Figure 6a shows an assembly 201 wherein the base parts 207, 227 have a different configuration, more particularly are not provided with a base element 11, 41 which is provided with a liquid drainage hole. In the assembly 201, the side wall 213 of the flowerpot 203 is provided with a liquid drainage hole 225 situated at a distance from the base part 227 of the liquid reservoir 205. In the assembly 301 shown in Figure 6b, the reservoir side wall 333 is provided with a liquid drainage hole 325 situated at a distance from the base part 327 of the liquid reservoir 305. The side wall 313 comprises no liquid drainage hole.

The working of the assembly 1; 201; 301 and the liquid reservoir 5; 205; 305 is almost identical. The assembly 1; 201; 301 is provided by the flowerpot 3; 203; 303, connected to the liquid reservoir 5; 205; 305 by means of the connection 50; 250; 350 already described above. As a result of the chosen connection obtained with the overlapping side walls of the liquid reservoir 5; 205; 305 and the flowerpot 3; 203; 303 in the assembly 1; 201; 301, the total assembly height, see, for example, the height H1 represented in Figure 3, is able to be kept relatively limited. After formation of the assembly 1; 201; 301, the assembly 1; 201; 301 can be filled with, for example, water. The liquid drainage hole 25; 225; 325 determines the quantity of water with which the assembly 1; 201; 301 can maximally be filled.

The height of the liquid drainage hole 25; 225; 325 can determine, for example, the plant type for which the assembly is suitable. The assembly 1 can namely be more suitable, during the seed development phase, storage phase, transport phase or sale phase, for a specific type of plant than the assemblies 201; 301 which are shown in Figures 6a, 6b.

The assembly 1 and the liquid reservoir 5 as shown in Figures 1-5 are namely particularly suitable for an ornamental plant, more particularly an orchid. Halfway through the seed development phase of the orchid, more particularly in the cooling phase, the assembly 1 is provided in the above-described manner and filled with water, for example until a water table has been provided as denoted with the reference numeral 60 in Figures 4 and 5. In the assembly 1, as a result of the configuration of the flowerpot 3 with the liquid opening 15 and the water reservoir 5, the roots of the orchid can minimally be located, preferably in the measure of 1.0-2.5 cm, in the water 60. This promotes in the cool phase the growth of the orchid. The reservoir 5 additionally provides a water buffer in order to bridge a lengthy time span, for example after the seed development, during the transport phase and/or sale phase.

As a result of the relatively high-situated liquid drainage hole 225, the assembly 201 shown in Figure 6a is suitable for several plant varieties, even for plants which need a relatively large water volume, for example during the transport phase. It is not necessary, of course, to fill the assembly 201 with the maximum volume of water.

As a result of the relatively low-situated liquid drainage hole 325, the assembly 301 shown in Figure 6b is suitable for plant varieties which need a relatively small water volume, for example during the transport phase. Particularly in the case of that base part 307 of the flowerpot 303 which is shown in Figure 6b, the roots of the plant should extend through holes in the base part 307 in order to enter into contact with liquid in the liquid reservoir 305. In the assembly 301, a fuse mechanism which is known per se may be used to supply water to the higher situated plant. In addition, it is possible to, in place of a raised middle section 307' of the base part 307, construct the base part 307 with a lowered middle section (not shown), which can extend to below the liquid drainage hole 325, so that liquid, during the filling via liquid openings in the lowered middle section, can flow into the flowerpot.

Although in the shown illustrative embodiments, through the sliding of the pot 3; 203; 303 and the reservoir 5; 205; 305 one into the other, these are clamped to one another via a slide fit in order to provide the liquid-tight connection, other connection types which lie within the concept of the invention, defined by the appended claims, are also possible

## Claims

1. Assembly (1; 201; 301) comprising a flowerpot (3; 203; 303) and a liquid reservoir (5; 105; 205; 305), wherein the flowerpot is provided with a base part (7; 207; 307), with a side wall (13; 213; 313) whereof a rim (19), facing away from the base part, defines an opening (21) leading into the interior (23) of the flowerpot, as well as with a liquid opening (15) which is provided in the base part and/or in a bottommost side wall section of the side wall, close to the base part, wherein the liquid reservoir is provided with a base part (27; 227; 327), as well as with a reservoir side wall (33; 133; 233; 333) whereof a rim (29), facing away from the base part, defines a liquid reservoir opening leading into the interior (31) of the liquid reservoir, the assembly is further provided with at least one liquid drainage hole (25; 125; 225; 325) situated at a distance from the base part of the liquid reservoir, so that the assembly is able to be filled with liquid, for example water or an aqueous solution, with a maximum liquid volume (100), wherein the reservoir side wall comprises, at least in part, the same shape as a part of the side wall of the flowerpot, so that a part of an inner side of the reservoir side wall is able to be displaced over a bottommost part of the outer side of the side wall of the flowerpot in order to provide a connection (50; 250; 350) therebetween, which extends around the centre axis of the assembly, **characterised in that** the connection is established by constructing at least those parts of the side wall of the flowerpot and the reservoir side wall which are to be connected to one another in the shape of a side wall of a truncated cone, or in the shape of side wall parts of a frustum, wherein by sliding the side walls, or parts of the side walls, which, viewed from the base parts, extend conically, one over the other, at a certain point sufficient clamping is attained, with the result that the connection is established.

2. Assembly (1; 201; 301) according to Claim 1, wherein the connection is a liquid-tight connection.

3. Assembly (1; 201; 301) according to one of the preceding claims, wherein the connection is releasable, preferably is manually releasable without a tool.

4. Assembly (1; 201; 301) according to one of the preceding claims, wherein the flowerpot and/or the reservoir are made of plastic.

5. Assembly (1; 201; 301) according to one of the preceding claims, wherein the flowerpot is a seed pot for a plant, for example an ornamental plant such as an orchid.

6. Assembly (1; 201; 301) according to one of the preceding claims, wherein the side wall of the flowerpot is provided with the at least one liquid drainage hole (225) situated at a distance from the base part of the liquid reservoir.

7. Assembly (1; 201; 301) according to one of the preceding claims, wherein, in the connected state of the flowerpot and the liquid reservoir, the reservoir side wall situated over the bottommost part of the side wall of the flowerpot maximally covers 50% of the total side wall of the flowerpot, preferably maximally 35%.

8. Liquid reservoir (5; 105; 205; 305) which is configured to be connected to a flowerpot (3; 203; 303), wherein the liquid reservoir is provided with a base part (27; 227; 327), with a reservoir side wall (33; 133; 233; 333) whereof a rim (29), facing away from the base part, defines a liquid reservoir opening leading into the interior (31) of the liquid reservoir, as well as with at least one liquid drainage hole (25; 125; 325), situated at a distance from the base part of the liquid reservoir, so that the liquid reservoir, when connected to the flowerpot, is able to be filled with liquid, for example water or an aqueous solution, with a maximum liquid volume (100), wherein the reservoir side wall is shaped, at least in part, to receive a part of the side wall of the flowerpot, so that a part of an inner side of the reservoir side wall is able to be displaced over a bottommost part of the outer side of a side wall of the flowerpot in order to provide a connection (50; 250; 350), extending around the centre axis of the liquid reservoir, between the liquid reservoir and the flowerpot, **characterised in that** the connection is established by constructing at least those parts of the side wall of the flowerpot and the reservoir side wall which are to be connected to one another in the shape of a side wall of a truncated cone, or in the shape of side wall parts of a frustum, wherein by sliding the side walls, or parts of the side walls, which, viewed from the base parts, extend conically, one over the other, at a certain point sufficient clamping is attained, with the result that the connection is established.

9. Liquid reservoir (5; 105; 205; 305) or assembly (1; 201; 301) according to one of the preceding claims, wherein the base part of the liquid reservoir is provided with a base part section (9; 39; 139) and at least one base element (11; 41; 141), which latter is raised relative to the base part section and is situated at a distance from the reservoir side wall, wherein the at least one raised base element is provided with the at least one liquid drainage hole (25; 125) which is situated at a distance from the base part section.

10. Liquid reservoir (5; 105; 205; 305) or assembly (1; 201; 301) according to Claim 9, wherein the at least one raised base element is provided with a base element top surface and with at least one base element side face extending between the base element top surface and the base part section, wherein the at least one liquid drainage hole is situated in the base element top surface, or close to the base element top surface, in the base element side face.

11. Liquid reservoir (5; 105; 205; 305) or assembly (1; 201; 301) according to Claim 9 or 10, wherein, by varying the dimensions of the base element or base elements in combination with the height of the liquid drainage hole relative to a lowest base part section, the quantity of liquid which can be maximally accommodated in the liquid reservoir is able to be regulated.

## Patentansprüche

1. Anordnung (1; 201; 301), umfassend einen Blumentopf (3; 203; 303) und einen Flüssigkeitsbehälter (5; 105; 205; 305), wobei der Blumentopf mit einem Bodenteil (7; 207; 307) versehen ist, mit einer Seitenwand (13; 213; 313), deren Rand (19), der vom Bodenteil abgewandt ist, eine Öffnung (21) definiert, die in das Innere (23) des Blumentopfs führt, sowie mit einer Flüssigkeitsöffnung (15), die im Bodenteil und/oder in einem untersten Seitenwandabschnitt der Seitenwand in der Nähe des Bodenteils vorgesehen ist, wobei der Flüssigkeitsbehälter mit einem Bodenteil (27; 227; 327) sowie einer Behälterseitenwand (33; 133; 233; 333) versehen ist, deren Rand (29), der vom Bodenteil abgewandt ist, eine Flüssigkeitsbehälteröffnung definiert, die in das Innere (31) des Flüssigkeitsbehälters führt, wobei die Anordnung ferner mit mindestens einer Flüssigkeitsablaufbohrung (25; 125; 225; 325) versehen ist, die vom Bodenteil des Flüssigkeitsbehälters beabstandet angeordnet ist, sodass die Anordnung dazu funktionsfähig ist, mit einer Flüssigkeit, zum Beispiel Wasser oder einer wässrigen Lösung, mit einem maximalen Flüssigkeitsvolumen (100) gefüllt zu werden, wobei die Behälterseitenwand zumindest teilweise dieselbe Form wie ein Teil der Seitenwand des Blumentopfs umfasst, sodass ein Teil der Innenseite der Behälterseitenwand dazu funktionsfähig ist, über einem untersten Teil der Außenseite der Seitenwand des Blumentopfs platziert zu werden, um eine Verbindung (50; 250; 350) dazwischen vorzusehen, die sich um die Mittelachse der Anordnung erstreckt, **dadurch gekennzeichnet, dass** die Verbindung durch die Konstruktion zumindest der Teile der Seitenwand des Blumentopfs und der Behälterseitenwand, die miteinander zu verbinden sind, in Form einer Seitenwand eines abgestumpften Kegels oder in der Form von Seitenwandteilen eines Kegelstumpfs hergestellt wird, wobei durch Verschieben der Seitenwände, oder Teile der Seitenwände, die sich, von den Bodenteilen aus betrachtet, konisch erstrecken, übereinander an einem bestimmten Punkt eine ausreichende Einspannung erhalten wird, mit dem Ergebnis, dass die Verbindung hergestellt ist.

2. Anordnung (1; 201; 301) nach Anspruch 1, wobei die Verbindung eine flüssigkeitsdichte Verbindung ist.

3. Anordnung (1; 201; 301) nach einem der vorstehenden Ansprüche, wobei die Verbindung lösbar ist, vorzugsweise ohne Werkzeug manuell lösbar ist.

4. Anordnung (1; 201; 301) nach einem der vorstehenden Ansprüche, wobei der Blumentopf und/oder der Behälter aus Kunststoff gefertigt ist/sind.

5. Anordnung (1; 201; 301) nach einem der vorstehenden Ansprüche, wobei der Blumentopf ein Anzuchttopf für eine Pflanze ist, zum Beispiel eine dekorative Pflanze wie eine Orchidee.

6. Anordnung (1; 201; 301) nach einem der vorstehenden Ansprüche, wobei die Seitenwand des Blumentopfs mit der mindestens einen Flüssigkeitsablaufbohrung (225) versehen ist, die vom Bodenteil des Flüssigkeitsbehälters beabstandet angeordnet ist.

7. Anordnung (1; 201; 301) nach einem der vorstehenden Ansprüche, wobei im verbundenen Zustand des Blumentopfs und des Flüssigkeitsbehälters die Behälterseitenwand, die über dem untersten Teil der Seitenwand des Blumentopfs angeordnet ist, maximal 50 % der gesamten Seitenwand des Blumentopfs bedeckt, vorzugsweise maximal 35 %.

8. Flüssigkeitsbehälter (5; 105; 205; 305), der dazu ausgelegt ist, mit einem Blumentopf (3; 203; 303) verbunden zu sein, wobei der Flüssigkeitsbehälter mit einem Bodenteil (27; 227; 327) versehen ist, mit einer Behälterseitenwand (33; 133; 233; 333), deren Rand (29), der vom Bodenteil abgewandt ist, eine Flüssigkeitsbehälteröffnung definiert, die in das Innere (31) des Flüssigkeitsbehälters führt, sowie mit mindestens einer Flüssigkeitsablaufbohrung (25; 125; 325), die vom Bodenteil des Flüssigkeitsbehälters beabstandet angeordnet ist, sodass der Flüssigkeitsbehälter, wenn er mit dem Blumentopf verbunden ist, dazu funktionsfähig ist, mit einer Flüssigkeit, zum Beispiel Wasser oder einer wässrigen Lösung, mit einem maximalen Flüssigkeitsvolumen (100) gefüllt zu werden, wobei die Behälterseitenwand zumindest teilweise geformt ist, um einen Teil der Seitenwand des Blumentopfs aufzunehmen, sodass ein Teil der Innenseite der Behälterseitenwand dazu funktionsfähig ist, über einem untersten Teil der Außenseite der Seitenwand des Blumentopfs platziert zu werden, um eine Verbindung (50; 250; 350) zwischen dem Flüssigkeitsbehälter und dem Blumentopf vorzusehen, die sich um die Mittelachse des Flüssigkeitsbehälters erstreckt, **dadurch gekennzeichnet, dass** die Verbindung durch die Konstruktion zumindest der Teile der Seitenwand des Blumentopfs und der Behälterseitenwand, die miteinander zu verbinden sind, in Form einer Seitenwand eines abgestumpften Kegels oder in der Form von Seitenwandteilen eines Kegelstumpfs hergestellt wird, wobei durch Verschieben der Seitenwände, oder Teile der Seitenwände, die sich, von den Bodenteilen aus betrachtet, konisch erstrecken, übereinander an einem bestimmten Punkt eine ausreichende Einspannung erhalten wird, mit dem Ergebnis, dass die Verbindung hergestellt ist.

9. Flüssigkeitsbehälter (5; 105; 205; 305) oder Anordnung (1; 201; 301) nach einem der vorstehenden Ansprüche, wobei der Bodenteil des Flüssigkeitsbehälters mit einem Bodenteilabschnitt (9; 39; 139) und mindestens einem Bodenelement (11; 41; 141) versehen ist, wobei letzteres in Bezug zum Bodenteilabschnitt erhaben und von der Behälterseitenwand beabstandet angeordnet ist, wobei das mindestens eine erhabene Bodenelement mit der mindestens einen Flüssigkeitsablaufbohrung (25; 125) versehen ist, die vom Bodenteilabschnitt beabstandet angeordnet ist.

10. Flüssigkeitsbehälter (5; 105; 205; 305) oder Anordnung (1; 201; 301) nach Anspruch 9, wobei das mindestens eine erhabene Bodenelement mit einer Bodenelementdeckfläche und mit mindestens einer Bodenelementseitenfläche, die sich zwischen der Bodenelementdeckfläche und dem Bodenteilabschnitt erstreckt, versehen ist, wobei die mindestens eine Flüssigkeitsablaufbohrung in der Bodenelementdeckfläche oder in der Nähe der Bodenelementdeckfläche in der Bodenelementseitenfläche angeordnet ist.

11. Flüssigkeitsbehälter (5; 105; 205; 305) oder Anordnung (1; 201; 301) nach Anspruch 9 oder 10, wobei durch Variieren der Abmessungen des Bodenelements oder der Bodenelemente in Kombination mit der Höhe der Flüssigkeitsablaufbohrung in Bezug zum niedrigsten Bodenteilabschnitt die Flüssigkeitsmenge, die im Flüssigkeitsbehälter maximal aufgenommen werden kann, geregelt werden kann.

## Revendications

1. Ensemble (1 ; 201 ; 301) comprenant un pot de fleurs (3 ; 203 ; 303) et un réservoir de liquide (5 ; 105 ; 205 ; 305), dans lequel le pot de fleurs est pourvu d'une partie de base (7 ; 207 ; 307), d'une paroi latérale (13 ; 213 ; 313) dont un bord (19), opposé à la partie de base, définit une ouverture (21) menant à l'intérieur (23) du pot de fleurs, ainsi que d'une ouverture de liquide (15) qui est prévue dans la partie de base et/ou dans une section de paroi latérale la plus basse de la paroi latérale, à proximité de la partie de base, dans lequel le réservoir de liquide est pourvu d'une partie de base (27 ; 227 ; 327), ainsi que d'une paroi latérale de réservoir (33 ; 133 ; 233 ; 333) dont un bord (29), opposé à la partie de base, définit une ouverture de réservoir de liquide menant à l'intérieur (31) du réservoir de liquide, l'ensemble est en outre pourvu d'au moins un trou de drainage de liquide (25 ; 125 ; 225 ; 325) situé à une distance de la partie de base du réservoir de liquide, de sorte que l'ensemble soit capable d'être rempli de liquide, par exemple de l'eau ou une solution aqueuse, avec un volume de liquide maximal (100), dans lequel la paroi latérale de réservoir comprend, au moins en partie, la même forme qu'une partie de la paroi latérale du pot de fleurs, de sorte qu'une partie d'un côté interne de la paroi latérale de réservoir soit capable d'être déplacée sur une partie la plus basse du côté externe de la paroi latérale du pot de fleurs afin de fournir une liaison (50 ; 250 ; 350) entre elles, qui s'étend autour de l'axe central de l'ensemble, **caractérisé en ce que** la liaison est établie en construisant au moins ces parties de la paroi latérale du pot de fleurs et de la paroi latérale de réservoir qui doivent être reliées l'une à l'autre sous la forme d'une paroi latérale d'un cône tronqué, ou sous la forme de parties de paroi latérale d'un tronc, dans lequel par coulissement des parois latérales, ou de parties des parois latérales, qui, vues depuis les parties de base, s'étendent de manière conique les unes sur les autres, à un certain point, un serrage suffisant est atteint, de sorte que la liaison soit établie.

2. Ensemble (1 ; 201 ; 301) selon la revendication 1, dans lequel la liaison est une liaison étanche aux liquides.

3. Ensemble (1 ; 201 ; 301) selon l'une des revendications précédentes,
dans lequel la liaison est libérable, de préférence est manuellement libérable sans outil.

4. Ensemble (1 ; 201 ; 301) selon l'une des revendications précédentes,
dans lequel le pot de fleurs et/ou le réservoir sont réalisés en plastique.

5. Ensemble (1 ; 201 ; 301) selon l'une des revendications précédentes,
dans lequel le pot de fleurs est un pot de semences pour une plante, par exemple une plante ornementale telle qu'une orchidée.

6. Ensemble (1 ; 201 ; 301) selon l'une des revendications précédentes,
dans lequel la paroi latérale du pot de fleurs est pourvue de l'au moins un trou de drainage de liquide (225) situé à une distance de la partie de base du réservoir de liquide.

7. Ensemble (1 ; 201 ; 301) selon l'une des revendications précédentes,
dans lequel, dans l'état relié du pot de fleurs et du réservoir de liquide, la paroi latérale de réservoir située sur la partie la plus basse de la paroi latérale du pot de fleurs couvre 50% au maximum de la paroi latérale totale du pot de fleurs, de préférence 35% au maximum.

8. Réservoir de liquide (5 ; 105 ; 205 ; 305) qui est configuré pour être relié à un pot de fleurs (3 ; 203 ; 303), dans lequel le réservoir de liquide est pourvu d'une partie de base (27 ; 227 ; 327), d'une paroi latérale de réservoir (33 ; 133 ; 233 ; 333) dont un bord (29), opposé à la partie de base, définit une ouverture de réservoir de liquide menant à l'intérieur (31) du réservoir de liquide, ainsi que d'au moins un trou de drainage de liquide (25 ; 125 ; 325), situé à une distance de la partie de base du réservoir de liquide, de sorte que le réservoir de liquide, lorsqu'il est relié au pot de fleurs, soit capable d'être rempli de liquide, par exemple de l'eau ou une solution aqueuse, avec un volume de liquide maximal (100), dans lequel la paroi latérale de réservoir est formée, au moins en partie, pour recevoir une partie de la paroi latérale du pot de fleurs, de sorte qu'une partie d'un côté interne de la paroi latérale de réservoir soit capable d'être déplacée sur une partie la plus basse du côté externe d'une paroi latérale du pot de fleurs afin de fournir une liaison (50 ; 250 ; 350), s'étendant autour de l'axe central du réservoir de liquide, entre le réservoir de liquide et le pot de fleurs, **caractérisé en ce que** la liaison est établie en construisant au moins ces parties de la paroi latérale du pot de fleurs et de la paroi latérale de réservoir qui doivent être reliées l'une à l'autre sous la forme d'une paroi latérale d'un cône tronqué ou sous la forme de parties de paroi latérale d'un tronc, dans lequel, par coulissement des parois latérales, ou de parties des parois latérales qui, vues depuis les parties de base, s'étendent de manière conique les unes sur les autres, à un certain point, un serrage suffisant est atteint, de sorte que la liaison soit établie.

9. Réservoir de liquide (5 ; 105 ; 205 ; 305) ou ensemble (1 ; 201 ; 301) selon l'une des revendications précédentes, dans lequel la partie de base du réservoir de liquide est pourvue d'une section de partie de base (9 ; 39 ; 139) et d'au moins un élément de base (11 ; 41 ; 141), ce dernier est surélevé par rapport à la section de partie de base et est situé à une distance de la paroi latérale de réservoir, dans lequel l'au moins un élément de base surélevé est pourvu de l'au moins un trou de drainage de liquide (25 ; 125) qui est situé à une distance de la section de partie de base.

10. Réservoir de liquide (5 ; 105 ; 205 ; 305) ou ensemble (1 ; 201 ; 301) selon la revendication 9,
dans lequel l'au moins un élément de base surélevé est pourvu d'une surface supérieure d'élément de base et d'au moins une face latérale d'élément de base s'étendant entre la surface supérieure d'élément de base et la section de partie de base, dans lequel l'au moins un trou de drainage de liquide est situé dans la surface supérieure d'élément de base, ou à proximité de la surface supérieure d'élément de base, dans la face latérale d'élément de base.

11. Réservoir de liquide (5 ; 105 ; 205 ; 305) ou ensemble (1 ; 201 ; 301) selon la revendication 9 ou 10, dans lequel, en faisant varier les dimensions de l'élément de base ou des éléments de base en combinaison avec la hauteur du trou de drainage de liquide par rapport à une section de partie de base inférieure, la quantité de liquide qui peut être reçue au maximum dans le réservoir de liquide est capable d'être régulée.
